(19) Europäisches Patentamt
European Patent Office
Office européen des brevets

(11) Publication number: 0 214 792
A2

# (12) EUROPEAN PATENT APPLICATION

(21) Application number: 86306455.6

(22) Date of filing: 20.08.86

(51) Int.Cl.[4]: C 08 L 83/08
C 08 L 71/04, C 08 J 5/22
B 01 D 13/04, B 01 D 13/01
B 01 D 53/22

(30) Priority: 29.08.85 US 770803

(43) Date of publication of application:
18.03.87 Bulletin 87/12

(84) Designated Contracting States:
DE FR GB

(71) Applicant: THE RESEARCH FOUNDATION OF STATE UNIVERSITY OF NEW YORK
State University Plaza Broadway
Albany New York 12246(US)

(72) Inventor: Cabasso, Israel
131 Buckingham Avenue
Syracuse New York 13210(US)

(72) Inventor: Tsai, Hsienkun
737 Euclid Avenue
Syracuse New York 13210(US)

(74) Representative: Laredo, Jack Joseph et al,
Elkington and Fife High Holborn House 52/54 High Holborn
London, WC1V 6SH(GB)

## (54) Polymer alloys of aminopolysiloxanes with brominated derivatives of polyphenylene oxide.

(57) Novel homogeneous, transparent, polymer alloy blends were prepared comprising various ratios of aminopolysiloxane and bromoalkylated polyphenylene oxide derivatives or bromoalkylated methylphosphorylated polyphenylene oxide derivatives. Membranes cast from solvent solutions of the homogeneous, transparent, polymer alloy blends were also transparent and homogeneous and useful as semipermeable membranes for gas separation.

EP 0 214 792 A2

# POLYMER ALLOYS OF AMINOPOLYSILOXANES WITH BROMINATED DERIVATIVES OF POLYPHENYLENE OXIDE

The present invention relates to the discovery that aminopolysiloxanes, when intimately mixed with brominated derivatives of polyphenylene oxide, produce clear, transparent, homogeneous polymer alloy blends. The present invention also relates to the discovery that the aforementioned clear, transparent, homogeneous polymer alloy blends can be cured to produce clear, transparent, homogeneous, polymer alloy films which can be used as semipermeable gas separation membranes.

Mixtures of polymers have been used for many years to achieve an economic or property advantage. Poly(phenylene oxide) combined with polystyrene is a long familiar plastic/plastic blend. Over the years, numerous combinations of chemicals, both monomers and polymers, have been developed utilizing random, block, and graft copolymerization. One ubiquitous problem in polymer mixtures is incompatibility. In general, polymers of different chemical natures are not compatible and, if mixed, will eventually phase separate.

One technique for enhancing miscibility between two incompatible or marginally compatible polymers is the modification of the chemical structure of one or both of the polymers or their respective monomeric units. Such modification is a desirable method for enhancing compatibility because it tends to produce a homogeneous blend rather than a mixture possessing large regions or domains of each component.

Polysiloxanes, $-[O-Si(R)_2]-$, in general, are not compatible with most organic polymers. However, modification of the polysiloxane or polysilane with organofunctional reactive groups has allowed the silicones to be incorporated

into many blends or mixtures with organic polymers. Noshay and McGrath (A. Noshay, J.E. McGrath, "Block Copolymers", pp 156-63, 275-84, 394-432 (1976)) have reviewed graft and block copolymerization of silicone polymers with organic polymers.

Unlike poly(phenylene oxide) (PPO) and polystyrene, poly(phenylene oxide) and polydimethylsiloxane (PDMS) are not inherently compatible. However, both PPO and PDMS can be chemically modified. Modification of PPO has been reviewed by Kopylov (V.V. Kopylov, Soviet Plastic 9, 6-9 (1970)). Cabasso, et al., (J. Appl. Polym. Sci. 18, 1969-86 (1974)) modified PPO by bromination of both the aromatic ring and a methyl substituent on the ring. Cabasso then blended the modified PPO with cellulose acetate to make semipermeable membranes for reverse osmosis, (I. Cabasso, C.N. Tran, J. Appl. Polym. Sci. 23, 2967-88 (1978)), and ultrafiltration (I. Cabasso, "Ultrafiltration Membranes and Applications", A.R. Cooper, ed., 57-78 (1980)).

This invention relates to the use of modified PPO and modified polysiloxane to produce a homogeneous, transparent, selectively permeable membrane for gas separation. Gas separation has many potential applications in industry and medicine. Currently, devices that utilize combustion energy, such as automobile engines and heating appliances, are designed to operate on the basis that air contains approximately 20 percent concentration of oxygen. Combustion efficiency is increased, and environmental pollution decreased, if air with an elevated oxygen concentration is supplied. Elevation of the oxygen concentration of air is also useful for respiratory therapy and in treating premature infants.

The development of gas separation membranes has included homopolymerized materials formed into a planar film, laminated films, composite films, and hollow fibers. The

fundamental problem in the development of a separation membrane is producing a polymer film with good gas transport properties, i.e., high permeability coefficient yet retaining a degree of selectivity. The concept of blending two or more materials, each with a desirable characteristic of either high permeability or high selectivity, is not new, but seldom successful. Thus, while silicones have been known for the high flexibility of the Si-O bond and the resultant permeability of silicones to gases, they have suffered from their incompatibility with many organic polymers in blend type technologies. Most of the glassy, organic polymers have lower permeability coefficients than do silicone polymers, but higher selectivity, i.e., higher separation factors. See Table I.

Table I

Coefficients of Permeability and Ideal Separation Factors (SF) of Various Polymers

| Polymer | $\bar{P}$x10 $cm^{10}$ x$cm^3/cm^2$ sec cmHg | | SF* $P(O_2)/\bar{P}(N_2)$ |
|---|---|---|---|
| | $P(N_2)$ | $P(O_2)$ | |
| siloxane rubber | 281.0 | 605.0 | 2.15 |
| polystyrene | 0.83 | 2.5 | 3.01 |
| polycarbonate | 0.3 | 1.4 | 4.67 |
| polysulfone | 0.24 | 1.3 | 5.41 |
| PPO | 3.81 | 15.8 | 4.15 |
| PPO-Br* (48% $CH_2Br$) | 0.33 | 1.6 | 4.8 |

* Brominated polyphenylene oxide explained in detail herein.

Table I shows that while siloxanes have a very high relative permeability, they exhibit a separation factor of

approximately half that of polycarbonate, polysulfone or PPO. Because the compatibility of polysiloxanes and most glassy polymers is not good, one of the best methods of preparing a homogeneous membrane comprising them is to modify their chemical structures and produce a homogeneous block copolymer. Polysulfone/polysiloxane block copolymers were prepared by Noshay, et al., (A. Noshay, M. Matzner, C.N. Merriam, Polym. Prep. 12(1) 247, (1971)), tested by Robeson, et al., (L.M. Robeson, A. Noshay, M. Matzner, C.N. Merriam, Die Angew. Makro. Chem. 29/30, 47-62 (1973)). Vaughn (H.A. Vaughn, Polym. Letter 7, 569-572 (1969)) developed solvent cast polymers of dimethylpolysiloxane-bisphenol A polycarbonate and Ward (W.J. Ward, W.R. Browall, M. Salemne, J. of Membrane Sci., 1, 99-108 (1976)) prepared silicone/polycarbonate copolymers to make very thin gas permeable membranes. The instant invention combines modified PPO, having a high permeability rate relative to other glassy polymers (but low relative to that of silicone) with modified polysiloxane, which has a very high permeability coefficient but a low separation factor to give transparent, homogeneous polymer alloy blend which can be custom designed to exhibit the desired characteristics of PDMS or PPO or combinations of the characteristics of both.

Krantz, in U.S. Patent No. 3,668,273, issued June 6, 1972, discloses organopolysiloxane-polyphenylene oxide block copolymers and methods of preparation. However, the reaction chemistry described therein utilized hydroxyl groups on PPO rather than bromine as in the instant invention. In addition, the reaction products in Krantz lacked the unique homogeneous property of the products of the instant invention. Krantz does not address gas separation and limits the PDMS used to those terminally end blocked, i.e.,

difunctional PDMS rather than the branched and/or pendant amino functionality of the instant invention.

Fan, et al., disclosed in U.S. Patent No. 4,093,600, issued June, 1978, silane end-capped polyarylene polyethers for use as adhesives and coatings. The silanes employed in Fan were limited, however, to terminally functional silanes. The preferred embodiment of the instant invention is to intimately mix pendant amino groups or pendant alkyl amino groups on the PDMS with bromoalkylated PPO derivative.

Clark, et al., was issued U.S. Patent No. 3,696,137 on October 3, 1972 for surface tension depressants for chlorinated aromatic dielectric fluids, said depressants being prepared from block copolymers of PPO and PDMS. However, the blends of Clark incorporated only difunctional hydroxy end-capped PPO oligomers and end-capped amino functional PDMS, which requires compounding at elevated temperatures. The incompatibility of the components was not a problem for the intended applications and no chemical modification was therefore required.

Several patents have issued disclosing various laminate or composite structures for gas permeable membranes produced by sandwiching a polymer membrane with higher gas separation coefficient inbetween permeable silicone polymers or vice versa. For instance, see Sugata, et al., Jap. Patent O.P.I. No. 301/84; Saito, et al., Jap. Patent O.P.I. No. 223,411/83; Hirose, U.S. Patent No. 4,470,831, issued September, 1984; Lundstrum, U.S. Patent No. 3,767,737, issued October, 1973; and Henis, et al., U.S. Patent No. 4,230,463, issued October, 1980. These multicomponent, laminate or composite membranes do not utilize homogeneity of the component polymers to achieve the desired gas separation membranes. In addition, the gas separation membranes of the

prior art suffer from the inconvenience and expense of preparing two or more separate films which must then be superimposed. The instant invention eliminates this problem by achieving a homogeneous, transparent, single-phase gas separation membrane from the polymer alloy blend reaction product of modified PPO and amino functional PDMS .

On August 28, 1984, four U.S. patents assigned to Monsanto Company, St. Louis, Mo. issued; Zampini, et. al., U.S. Patent No. 4,468,503; Zampini, et al., U.S. Patent No. 4,468,501; Malon, et al., U.S. Patent No. 4,468,500; and Malon, et al., U.S. Patent No. 4,468,502. While these addressed the formation of gas separation membranes from modified PPO, none used polysiloxanes, polysilanes, aminopolysiloxanes, aminopolysilanes, aminoalkylpoly-siloxanes, or aminoalkylpolysilanes to react with or crosslink the modified PPO. Therefore, the reaction products of Zampini and also Malon and their respective membrane products cannot be expected to provide the permeability of the instant invention.

Strachan, et al., in U.S. Patent No. 3,539,655, issued November, 1970, claimed physical mixtures of an organopolysiloxane and a polyarylene polyether. However, the Strachan patent requires that the PPO contain a "residuum of the dihydric phenol, E", referring to the residue of the dihydric phenol after the removal of the two aromatic hydroxyl groups, and a residuum E' which is the aromatic or benzenoid residue of the compound after the removal of the halogen atoms on the benzenoid nucleus. This, therefore, differs from the instant invention by requiring two different aromatic rings in the PPO. In Strachan, the preferred embodiment of the invention uses phenyl rings on the PPO free of alkyl or haloalkyl substituents. Strachan also specifies a divalent connecting radical G' be present between every

other phenyl ring on the PPO chain, wherein the G' is described as representing a member of the group consisting of sulfone, carbonyl, vinyl, sulfoxide, azo, saturated fluorocarbon, organic phosphine oxide and ethylidene groups. In addition, Strachan does not claim or disclose the homogeneity and transparency of the polymer alloy blend of the instant invention.

In U.S. Patent No. 3,536,657, issued October 27, 1970, Noshay claimed siloxane-polyarylene polyether copolymers blended with thermoplastic polyarylene polyethers to yield mixtures characterized by improved impact strength and improved resistance to environmental stress cracking. However, like the Strachan patent, Noshay requires that the thermoplastic copolymers have a basic structure composed of recurring units having the formula -O-E-O-E'- wherein E is the residuum of the dihydric phenol and E' is the residuum of the benzenoid compound having an inert electron withdrawing group in at least one of the positions ortho and para to the valence bonds, and where both of said residua are valently bonded to the ether oxygens through aromatic carbon atoms. The residua E and E' are prepared by the reaction of an alkali metal double salt of a dihydric phenol and a dihalobenzenoid compound having an electron withdrawing group as described above. The mixtures in Noshay are two-phased blends of incompatible components. Permeability to gases is not discussed and the cloudy appearance of the materials is not a problem in the desired coating and insulating applications but cloudiness certainly leads to permeability problems if present in the instant invention.

In the present invention, transparent, homogeneous, gas permeable films (membranes) are produced from polymer mixtures comprising aminopolysiloxanes and bromoalkylated poly(phenylene oxides) and derivatives of this product such

as phosphorylated PPO. The key to the utility of the membranes in gas separation is the homogeneity of the membrane which is a result of the unique homogeneity of the polymer blends created in this invention. Prior art has demonstrated that the mixing of polysiloxanes or aminopolysiloxanes with most organic polymers suffers from the problem of incompatibility of the polymers. Incompatibility is manifest as a cloudy or opaque character to the polymer mixtures and frequently results in phase separation of the components. Membranes and films prepared from such opaque mixtures of incompatible polymers are also opaque and are nonhomogeneous, exhibiting regions or domains resulting from the segregation of the two polymer components. When a nonhomogeneous membrane is utilized to separate gases, the desired selectivity is lost and the gases will permeate through the more permeable domain of the lowest density and greatest free volume. In membranes prepared from silicone-organic blends, characteristically noncompatible, the silicone domains exhibit higher permeability than the organic domains exhibit such that the effective permeability coefficient of the total membrane is virtually equal to that of a completely silicone membrane. Homogeneous, transparent membranes of the present invention, however, exhibit a permeability coefficient which is a function of the percent polysiloxane present in the polymer alloy blend. The coefficients of permeability for membranes produced from the polymer alloy blend of the instant invention are also intermediate in value between the coefficient of permeability for a PPO and that for a polysiloxane membrane.

In this invention, a solvent solution of the modified PPO is mixed with a solvent solution of aminopolysiloxane to produce a polymer blend, which is a physical mixture. The polymer blends are clear if sufficient

chemical interactions have occurred between the components. With adequate mixing, the polymer blends become homogeneous polymer blends which may but need not be completely crosslinked at that time into a polymer alloy. A polymer alloy is a homogeneous blend of two or more polymers. The polymer blends or polymer alloys of the instant invention can be cast onto a surface and the solvent allowed to evaporate and the resulting film can be further dried to produce a crosslinked polymer alloy film or membrane. The polymer alloy can be redissolved or can be further crosslinked. The polymer blends can also be allowed to gell at room temperature or at elevated temperatures without driving off the solvent. The polymer blends and the resulting polymer alloys and membranes, being random in structure and crosslinking, differ from block copolymers.

The nonobvious homogeneity found in the polymer alloys of the present invention is related to the inherent characteristics of the specific modified polymers utilized. The large difference in solubility parameter values of the unmodified polymers indicates they would not be a miscible pair, i.e.,

$\Delta\delta$ = $\delta$ [poly(2,6-dimethyl-1,4-phenylene oxide)] - $\delta$ [poly-dimethylsiloxane] = 9.3-7.3 = 2.0,

where $\delta$ is the solubility parameter (measured in units of $(cal/cm^3)^{1/2}$) of each component and $\Delta\delta$ is the difference between the solubility parameters of the components. As a first approximation, and in the absence of strong interactions such as hydrogen bonding, solubility can be expected if $\delta 1-\delta 2$ is less than approximately 0.5, but not if the difference is appreciably larger.

This invention, however, corresponds to a novel class of polymer blends or mixtures consisting of modified poly(phenylene oxide) and organopolysiloxane. To overcome the

incompatibility problem the invention imparts minor modifications of both components (polymers), such as bromoalkylation of poly(phenylene oxide) (see U.S. Patents 3,262,892, issued July 26, 1966; 3,262,911 issued July 26, 1966; 3,378,505 issued April 16, 1968; and 4,073,754 issued February 14, 1978), and attachment of organic functional groups such as amino groups or aminoalkyl groups onto the polysiloxane at either the terminal positions (see U.S. Patent 3,243,475 issued March 29, 1966) or at the side chain as branched monofunctional, difunctional, or polyfunctional aminopolysiloxanes (see U.S. Patents 3,395,102 issued July 30, 1968; 3,303,048 issued February 7, 1967; British Patent 1,330,733 published September 19, 1973; U.S. Patent 3,449,289 issued June 10, 1969; U.S. Patent 3,200,031 issued August 10, 1965; U.S. Patent 2,947,771 issued August 2, 1960; British Patent 1,060,077 published February 22, 1967; British Patent 1,191,323 published May 13, 1970). The instant invention demonstrates that by providing the reactive sites such as bromoalkyl groups on the PPO and amine (or aminoalkyl) groups on the polysiloxane, the two polymers can be mixed intimately on the molecular level to form homogeneous blends. The specific interaction of and subsequent reaction between these two modified polymers favor thermodynamically and kinetically the mixing rather than phase separation of the components.

In the present invention transparent, homogeneous aminopolysiloxane-bromoalkylpolyphenylene oxide polymer blends are produced by the intimate blending of an aminopolysiloxane, polymer A, of the formula

$$R1-[(\underset{CH_3}{\overset{CH_3}{Si}}-O)_x-(\underset{R_2}{\overset{CH_3}{Si}}-O)_y-\underset{CH_3}{\overset{CH_3}{Si}}-O)_z]-R1$$

and a brominated alkyl polyphenylene oxide derivative, polymer B, of the formula

```
    R3          R5
    |           |
H-[Ar-O-]m ---- [Ar-O---]n--H
    |           |
    R4          R6
```

wherein R1 is a trimethylsiloxy group or aminoalkyl group consisting of one to three carbon atoms and having at least one primary, secondary, or tertiary monoamine, diamine, or polyamine, or primary, secondary or tertiary alkylmonoamine, alkyldiamine, or alkylpolyamine wherein the alkylpolyamine group has three or more amine groups. The reactivity of aminopolysiloxane toward the bromomethylated PPO decreases following the sequence of primary, secondary, and tertiary amines. The ratio of (x+z)/y is no greater than 47 to 1 and the preferred ratio of (x+z)/y is in the range of 7 to 1 to 17 to 1 because of the diminishing reactivity and reduced crosslink density of the resulting polymer alloy if the polysiloxane backbone is too long. In addition, the average molecular weight of the polysiloxane chain between the aminoalkyl groups or amino groups is critical to the extent of phase separation in the final polymer blend solution. The preferred polysiloxane chain length between reactive amino groups is in the range of 25 to 100 repeating units. As set forth above, the R1 group can be a trimethylsiloxy group, i.e., $(CH_3)_3SiO-$, an amino group or an aminoalkyl group of one to three carbon atoms. When R1 does not contain an amino group, R2 cannot be $CH_3$ but must contain at least one primary, secondary, or tertiary amine group or a polyamine group. Preferably, the polysiloxane has more than one amine group to thereby facilitate crosslinking the polysiloxane with the PPO through the bromomethyl groups on the PPO.

Therefore, R2 can be $CH_2CH_2CH_2NH_2$, $CH_2CH_2NH_2$, $CH_2NH_2$, $CH_2NHCH_2CH_2NH_2$, $CH_2CH_2CH_2NHCH_2CH_2NH_2$, $CH_2CH(CH_3)CH_2NHCH_2CH_2NH_2$, or $CH_3$ but R2 can only be $CH_3$ if at least one of the R1 groups is, and preferably both the R1 groups are, amino functional. If both R1 groups are amino functional (i.e., "amino end-capped") but R2 is not amino functional (eg. R2 is $-CH_3$) and the molecular weight of the aminopolysiloxane is greater than approximately 20,000, the components are not compatible and the mixture phase separates. If, however, the molecular weight of the aminopolysiloxane is less than approximately 20,000 such "amino end-capped" polysiloxanes do not give gross phase separation with the modified PPO. Polysiloxanes with monoamine functionality are still operative in this invention if the degree of polymerization (DP) is sufficiently low (eg. DP=50).

R3, R4, R5 and R6 are each independently hydrogen, bromine, alkyl groups consisting of one to six carbon atoms, phosphonate groups or bromoalkyl groups consisting of one to six carbon atoms and wherein at least one of R3, R4, R5, or R6 is a bromoalkyl group. There must be present on the PPO or alkyl modified PPO a sufficient amount of bromine to allow crosslinking with the amino or alkylamino groups on the polysiloxane. Homogeneous polymer alloys were produced from the reaction of aminopolysiloxane with modified PPO exhibiting as little as 1 mole percent bromine as $-CH_2Br$ on the polymer. However, both the reaction rate and the degree of crosslinking increase with higher bromine content on the alkyl substituent. The preferred range of weight mole percent bromine on the PPO is 10 to 70. The modified PPO can thus have multiple sites of modification such as alkylation, phosphonylation, bromination, and bromoalkylation on the PPO backbone. For example

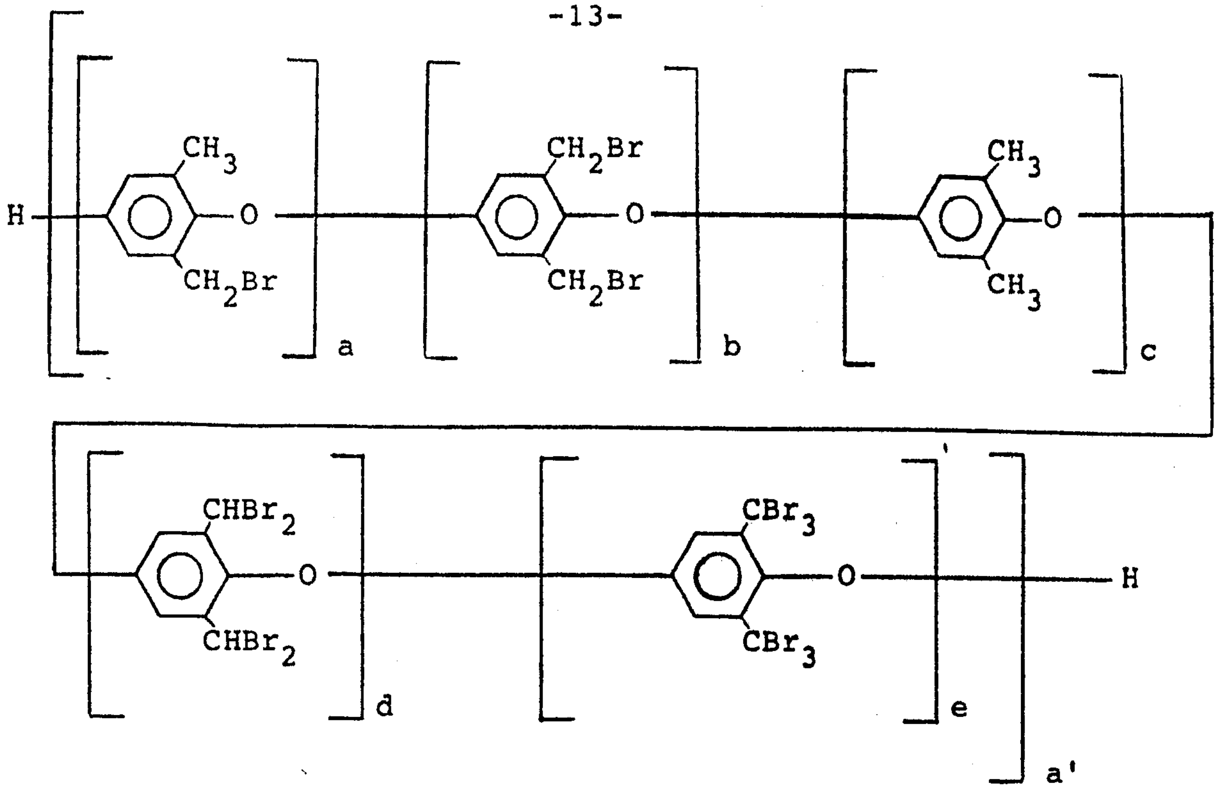

and

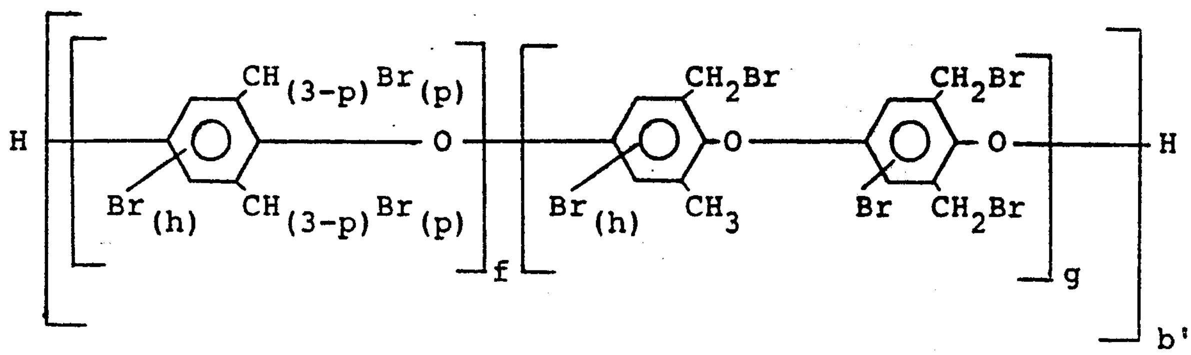

and

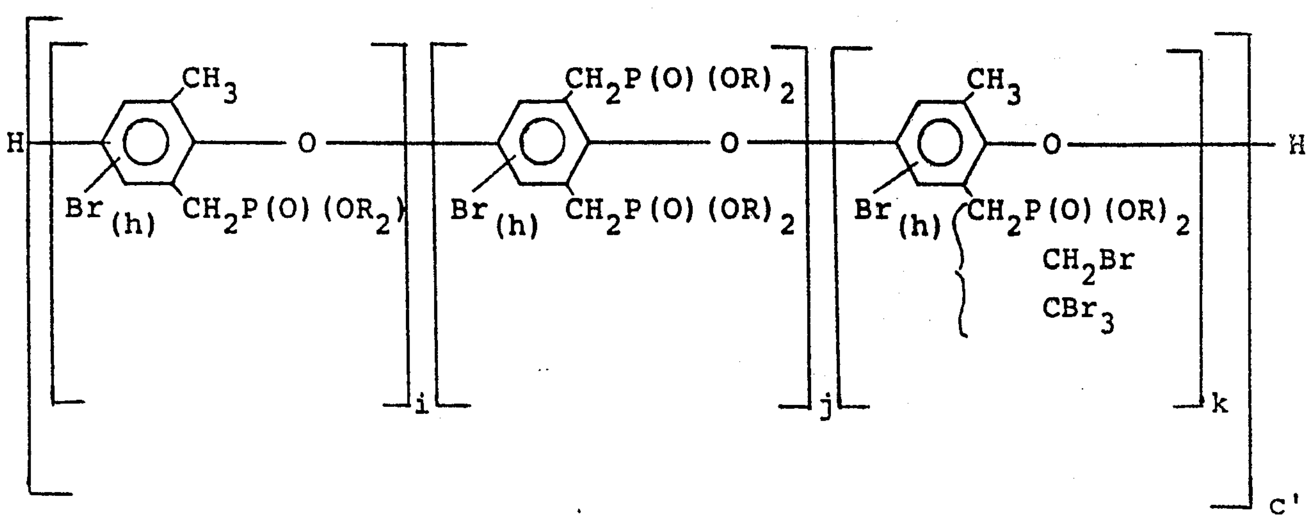

where a, a', b, b', c, c', d, e, f, g, i, j, and k are independent positive integers, h can be 0, 1, or 2, and p can be 3, 2, 1, or 0. (See Cabasso, et al., J. Appl. Poly. Sci., vol. 18 pp. 1969-86 (1974).)

The polymer alloy formation requires a certain de minimis level of specific interactions between the bromomethyl groups on the PPO and the amino groups or the aminoalkyl groups on the polysiloxane to overcome the demixing or phase separation characteristic of the unmodified polymer pair. The higher the bromomethyl group content of the modified PPO, the faster the rate of the crosslinking reaction will be. The copolymerization reaction rate was maximized when the weight ratio of bromomethylated PPO to aminopolysiloxane was between 2 to 1 and 1 to 2.

The subscripts m and n are positive integers such that $10 < (m+n) < 1000$ and $n/(m+n) > 0.01$.

The polymer modification discovered herein and the blending techniques utilized provide a bridge between organic polymers, such as PPO, and inorganic polymers, such as polysiloxanes. The inflexible and glassy polymers of the brominated poly(phenylene oxide) derivatives family can be mixed with organopolysiloxanes to improve their toughness, impact strength, and resistance to environmental stress and cracking. Conversely, the soft rubbery, organopolysiloxane is reinforced by the glassy, brominated PPO polymer and derivatives. The blends of this invention produce polymer alloys having a very broad glass transition temperature range, extending from -120 degrees Centigrade to 220 degrees Centigrade. The properties of the polymer alloys produced by this invention depend on the composition or the weight ratio of aminopolysiloxane to modified PPO. Dynamic mechanical thermograms from Torsional Braid Analysis exhibited a wide plateau due to the crosslinked structure of the blends. Over

the range of composition blends from 99:1 to 1:99 by weight, the polymer alloys and resultant membranes are transparent. Since the difference in refractive indices of these polymers is rather high (ca. 0.2), if there is a gross phase separation in the polymer alloy matrix it can take place only as dispersed microphases. The polymer alloy can be tailored to a high refractive index range by manipulation of the ratio of components.

The polymer alloys of this invention exhibit a very useful permselective membrane property for gas mixture and also liquid mixture separations, combining the high permeability of polysiloxanes with the high selectivity of PPO. The high bromine content of the polymer blends imparts the flame retardancy characteristic of brominated polymers.

<u>Preparation of Modified PPO With Varying Degrees of Bromine Substitution</u>

The preparation of the bromomethylated poly(2,6-dimethyl-1,4-polyphenylene oxide) is described by Cabasso, et al., in J. Appl. Polym. Sci. vol. 18, 1969-86 (1974) and U.S. Patent No. 4,073,754 (1978) and Jauhiainen, Die. Angew. Mackromol. Chem. 104, 117-27 (1982). The degree of bromomethylation depends on the molar ratio of bromine to PPO, and the reaction conditions. The reaction steps are as follows :

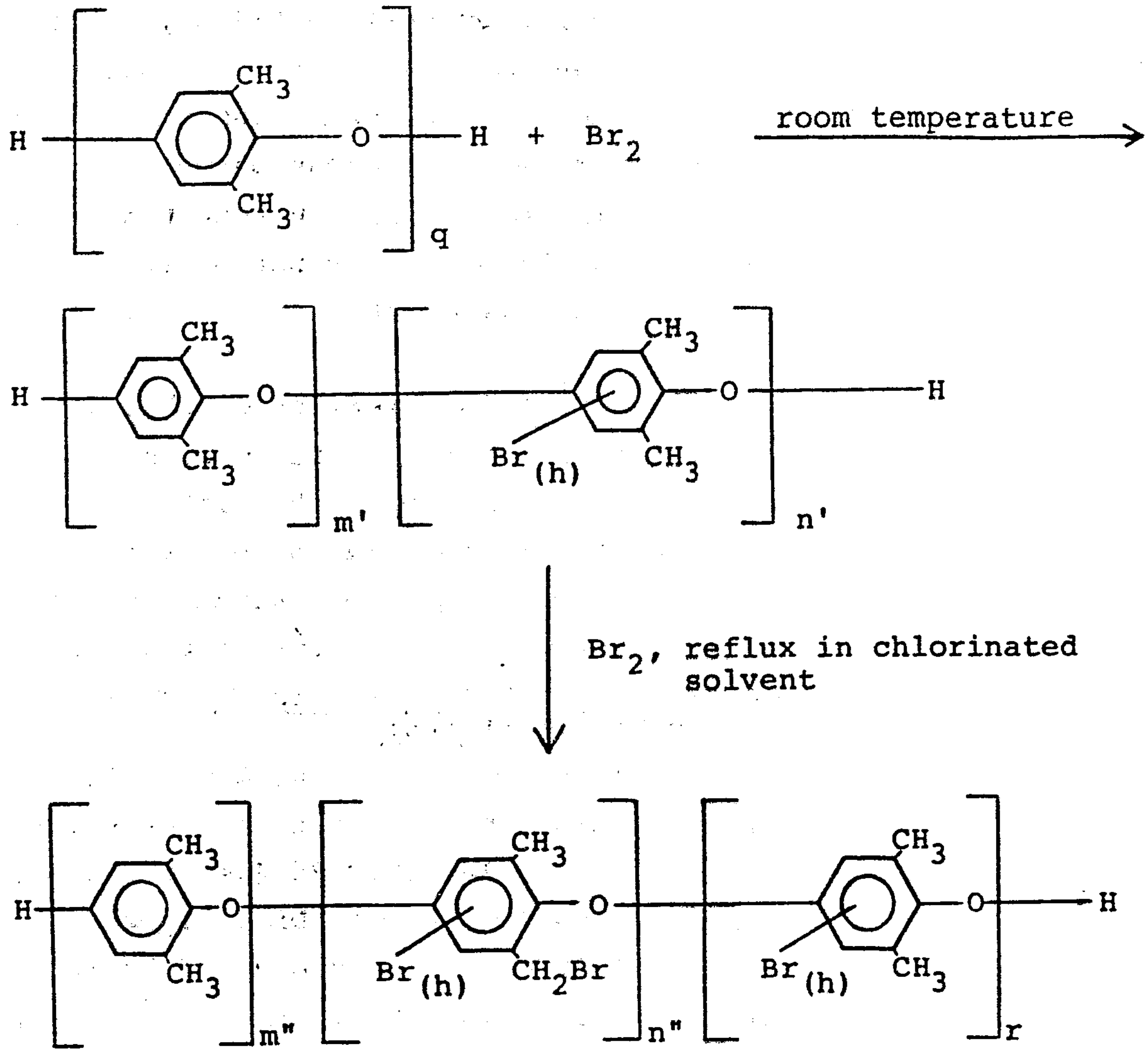


where q, m', n', m'', n'', and r are positive integers. A low bromine concentration and a high reaction temperature favor the free radical bromination at the alkyl site while room temperature conditions favor the electrophilic aromatic substitution on the phenylene ring. Aliquots of reaction product were removed at various times to produce samples of modified PPO with varying degrees of bromomethylation.

<u>Reaction Mechanism</u>

The reaction between the aminopolysiloxane (obtained from Dow Corning Corporation, Midland, Michigan as Dow Corning® Q2-8038 and prepared by the hydrolysis of

chloroisobutyl polydimethylsiloxane in the presence of ethylenediamine) and the brominated methyl PPO, dissolved in a mutual solvent, occurs at the amino and bromo sites. The amine on the polysiloxane reacts with the methylene bromide group on the PPO eliminating hydrogen bromide (HBr) and resulting in the formation of a covalent methylene amine linkage between the components. Proton NMR kinetic studies indicate that the bromine on the methylene bromide group, $CH_2Br$, is eliminated during the reaction. When enough of these interpolymer reactions have occurred, the mixture forms a gel indicated by a rise in viscosity.

Reaction Rate

The rate of the reaction is a function of the concentration of each component in the solvent medium, the degree of bromination on the methyl groups substituted on the PPO, and the degree of amine functionality on the polysiloxane. As the degree of bromination on the methyl substituent of the PPO is increased, the rate of the reaction between the polysiloxane and the PPO increases. Similarly, the reaction rate increases with increasing amine functionality on the polysiloxane. Bromine atoms located on the phenyl ring of the PPO rather than on the methyl group will not react with the amine groups of the polysiloxane. However, the bromine atoms located on the phenyl ring may affect the reaction rate. It is believed, but the inventors do not wish to be held to such a theory, that the electron withdrawing effect of the electronegative bromine atom destabilizes the reaction intermediate produced during the amine-methyl bromide reaction. The reaction rate is also accelerated at higher temperatures. (See Table II.)

Table II

Temperature Effect On Reaction Between

PDMS (2 Mole % $NH_2$) And PPOBr (60 Mole % $-CH_2Br$) When Mixed 1 To 1 By Weight At 10 Weight % Total Concentration In $CHCl_3$

| Temp. (deg. C) | 25 | 30 | 40 | 50 |
|---|---|---|---|---|
| Gelation Time (min.) | 53.5 | 39 | 21 | 14.5 |

Bromination on the phenyl ring will also affect the glass transition temperature of the resulting polymer blend. The glass transition temperature, Tg, is the temperature below which a polymer is transformed from a rubbery to a glassy material. Below the Tg, insufficient thermal energy is available for other than short range cooperative movements of polymer chain segments. Above the Tg sufficient energy is available to enable relatively long segments of the polymer chain to move. Jauhiainen, Die Ang. Makr. Chem. 104, 117-127 (1982) showed that the bromination of PPO on the phenyl ring will increase the glass transition temperature of PPO 10 degrees Centigrade if 14 percent of the available sites on the phenyl rings have been brominated. Bromination of 100 percent of the available phenyl sites raises the glass transition temperature a total of 67 degrees Centigrade. Bromination of the methyl PPO on the methyl group, however, will decrease the glass transition temperature by 14 degrees Centigrade (at 10.2 percent bromination of the methyl sites) and by 37 degrees Centigrade as $CH_2Br$ = 91.4 percent. (See Table III).

Table III

Effect of Bromination on Glass Transition Temp.

| Polymer | Tg, degrees C (glass transition temperature range) | Midpoint |
|---|---|---|
| Polydimethylsiloxane | -125 - -120 | -123 |
| PPO | 205-220 | 211 |
| PPO-Br (phenyl-Br= 14.6%) | 215-230 | 221 |
| PPO-Br (phenyl-Br= 100%) | 272-287 | 278 |
| PPO-Br (methylene-Br= 10.2%) | 191-206 | 197 |
| PPO-Br (methylene-Br= 91.4%) | 168-183 | 174 |

If a single Tg is found between the Tg values expected for each of the separate components, this demonstrates a homogeneous blend. If two distinct Tg's appear, one for each constituent polymer, the polymer alloy is heterogeneous. This, however, was not observed for the polymer alloys of the invention. A single broader peak inbetween the values for the separate components indicates the polymer alloys of this invention have a crosslinked structure.

Film Preparation

Aminopolysiloxane-bromoalkyl polyphenylene oxide derivatives polymer blend solutions were prepared at 5 to 10 weight percent in solvents such as chloroform. The polymer blend solutions, which were transparent and homogeneous, were mixed until the viscosity increased to a point sufficient to allow casting the solutions onto a glass plate. Using an adjustable casting blade, which could be utilized to control the thickness of the solution layer cast down, the polymer blend solution was spread over the glass plate. To cure the

polymer alloy, the solvent was then evaporated at ambient conditions and the resulting film was manually removed from the glass substrate. The film was then cut to testing sizes and dried in a vacuum oven at 60°C. for 24 hours or at 40°C. for 48 hours. Clear, transparent, homogeneous, crosslinked polymer alloy films of 1 to 2 mil thickness were thus produced which were tested as membranes for permeability and separation of gases. Any pinholes, nonuniformity or other defect in the film would be evident by a nonlinear relationship between pressure drop and gas flux during permeability testing or evidenced by low separation values. Films produced by the above method can serve as gas separation membranes.

The density of the resulting homogeneous polymer alloy membrane was found to be dependent upon the composition. Table IV shows the relationship between the ratio of bromomethyl PPO to aminopolysiloxane (PDMS-$NH_2$) and the density of the corresponding film.

Table IV

Density of PPO-Br/ Aminopolysiloxane Films

| PPO-Br/PDMS-$NH_2$ | PPO-Br, % | Density, $g/cm^3$ |
|---|---|---|
| 1/2 | 33.3 | 1.11 |
| 2/3 | 40.0 | 1.1475 |
| 1/1 | 50.0 | 1.19 |
| 2/1 | 66.7 | 1.2425 |
| 3/1 | 75.0 | 1.3075 |
| - | 100.0 | 1.4325 |

(The aminopolysiloxane used in Table IV had a viscosity of 150 centistokes, a degree of polymerization of

approximately 100, a molecular weight of approximately 8000 and 2 mole percent alkyl amine. The PPO-Br used in Table IV had 60 mole percent of the available methyl groups on PPO brominated, yielding a polymer with a number average molecular weight of 44,596.)

Table V shows a similar trend in polymer alloy densities utilizing an aminopolysiloxane with a 10 mole percent by weight amine functionality.

Table V

Density of PPO-Br/Aminopolysiloxane Polymer Alloys

| PPO-Br/PDMS-$NH_2$ Wt. Ratio | PPO-Br, % | Density, $g/cm^3$ |
|---|---|---|
| 1/2 | 33.3 | 1.135 |
| 1/1 | 50.0 | 1.215 |
| 2/1 | 66.7 | 1.2675 |
| 3/1 | 75.0 | 1.3050 |
| - | 100.0 | 1.4325 |

(The aminopolysiloxane used in Table V. had 10 mole percent amine functionality.)

Tables IV and V show that the density of the resulting polymer alloy increases with the amount of $CH_2Br$ and amine present in the mixture. The density of the resulting membrane was thus a function of the cross-link density of the polymer alloy.

In order to accommodate increased movement of long chain segments of polymers, an increase in the free volume of the polymer is necessary. In addition to accommodating chain segments, this free volume may be filled by gaseous penetrants. Glassy polymers contain much less free volume than rubbery polymers and openings in the matrix are relatively fixed in space. Because the total free volume is

much smaller for glassy polymers, or for copolymers and polymer alloys with a high percentage of glassy polymer, their permeability tends to be low. The separation factor of the membranes produced from the polymer alloys of the instant invention was directly related to the ratio of the components and the degree of crosslinking. The permeability coefficient was inversely related to the degree of crosslinking. The degree of crosslinking was related to both the extent of bromination on the alkyl sites of the PPO polymer and the weight per cent of amine functionality on the PDMS.

Gas Permeability

One of the main applications for the polymer alloys of the present invention is the separation of oxygen and nitrogen from air mixtures. Gas permeation through a rubbery membrane (such as polysiloxanes) is controlled by molecular diffusion (the rate determining step) with solution equilibrium established between the penetrant in the gas phase and in solution at the membrane interface. In gas separation through glassy polymers (such as PPO) at temperatures below Tg the motions of the polymer chains are not sufficiently rapid to completely homogenize the penetrant's environment. Penetrant molecules can thus occupy microcavities of different sizes and with very different intrinsic mobilities. Gas permeation through copolymer blends or polymer alloys is a function of the phase morphology dictated by the ratio of components.

Transparent, homogeneous membranes (films) of 1 to 2 mil thickness were produced from solutions of the polymer blend of aminopolysiloxane-bromomethylpolyphenylene oxide. The ability of the membranes to separate oxygen and nitrogen was determined by using gas chromatography. The transmembrane gas flux was found by use of ASTM D1434-75 to be proportional to the feed pressure applied to the membrane

surface. For these polymer alloy membranes, increasing the feed gas pressure increased the permeability, separation factor (SF) and oxygen enrichment but only up to a pressure range of 150 to 250 psig at which the SF values leveled off. (See Table VI).

Table VI

Effect Of Pressure Of Feed Gas On Separation Factor (SF) of PPOBr/PDMS-$NH_2$ Polymer Alloy

| Pressure (psig) | SF (Oxygen/Nitrogen) |
|---|---|
| 0 | 1.0 |
| 25 | 1.60 |
| 50 | 1.994 |
| 100 | 2.199 |
| 150 | 2.22 |
| 200 | 2.292 |
| 250 | 2.347 |
| 300 | 2.356 |
| 350 | 2.4 |

(The PPOBr in Table VI had 60 mole percent bromine as $-CH_2Br$ and the PDMS had 10 mole percent amine functionality. The PPOBr and the PDMS were combined on a 1 to 1 weight ratio.) The separation factor of the polymer alloy membranes decreased but the permeability coefficient increased when the percentage of aminopolysiloxane in the polymer alloy was increased. (See Table VII)

Table VII

Permeability Coefficient And SF vs. Aminopolysiloxane Concentration In The Polymer Alloy Composition

| | Perm. Coeff.x$10^{10}$ cm$^3$ cm/cm$^2$ s cmHg | | | SF |
|---|---|---|---|---|
| $PDMS-NH_2$, % | $\bar{P}O_2$ | $\bar{P}N_2$ | $\bar{P}_{air}$ | O/N |
| 0 | 1.6 | 0.33 | 0.6 | 3.8 |
| 25.0 | 11.03 | 4.01 | 5.42 | 2.85 |
| 33.3 | 25.35 | 8.23 | 12.15 | 2.725 |
| 50.0 | 61.16 | 24.76 | 32.37 | 2.2 |
| 66.7 | 160.70 | 87.7 | 109.8 | 1.775 |
| 100.0 | 600.0 | 300.0 | 360.0 | 1.90 |

(P is the steady state permeability coefficient. The $PDMS-NH_2$ used had 10 mole percent amine functionality and the PPOBr had 60 mole percent bromine as $-CH_2Br$.) When the $PDMS-NH_2$ used in the polymer alloy had 2 mole percent amine functionality the separation factors were lower than when the $PDMS-NH_2$ used had 10 mole percent amine functionality. (See Table VIII).

Table VIII

Comparison Of 2 Mole % And 10 Mole % Amine Functionality On The PDMS-$NH_2$ In The Polymer Alloy To The Separation Factor SF

| PDMS-$NH_2$ in Polymer Alloy, Wt. % PDMS | SF (O/N) | |
|---|---|---|
| | 2 Mole % $NH_2$ on PDMS | 10 Mole % $NH_2$ on |
| 0 | 3.8 | 3.8 |
| 25 | 2.45 | 2.85 |
| 33.3 | 2.25 | 2.725 |
| 50.0 | 2.0 | 2.2 |
| 66.7 | 2.0 | 1.775 |
| 100.0 | 2.0 | 1.9 |

The results illustrated in Table VIII show that the increased degree of amine functionality on the polysiloxane provides a more highly crosslinked and less permeable polymer alloy membrane. Table VIII. also shows that the instant invention produces homogeneous polymer alloys without microphase separation of the components. If microphase separation of the components occurred, all the penetrant gas would go through the higher permeability polysiloxane phase. However, the results of Table VIII. show evidence of the absence of such domains because the SF values are not the same as that of pure polysiloxane (SF=2.0) but, rather, the data of Table VIII. present a linear relationship between polysiloxane content and the separation factor.

The following examples are given to further illustrate the process and products of the present invention. These examples should be considered illustrative only of the reaction and products of the present invention and not as

limiting in any way the full scope as covered in the claims.

Example 1

Bromination of poly(2,6-Dimethyl-1,4-phenylene oxide) (PPO). A 3-necked-round bottom glass flask, equipped with a thermometer, condenser, and mechanical stirrer, was charged with 30 grams (0.00128 moles) of poly(2,6-dimethyl-1, 4-polyphenylene oxide) (number average molecular weight 23,400) (obtained from General Electric Company, Schnectedy, N.Y.) dissolved in 600 milliliters of S-tetrachloroethane. The polymer solution was heated to reflux (140 to 150 degrees Centigrade) by a heating mantle with moderate agitation and a solution of 10 volume percent bromine in S-tetrachloroethane was added dropwise through a separatory funnel. The reaction started immediately and the by-produced hydrogen bromide was absorbed in a trap of 5 weight/volume percent sodium hydroxide.

After the bromination reaction had been allowed to run approximately three hours, the reaction product was cooled to room temperature and the bromomethylated polyphenylene oxide was precipitated by adding a large excess of methanol. The precipitate was filtered and washed several times with fresh methanol, redissolved in chloroform and filtered to remove any impurities or gelled material. The bromomethyl polyphenylene oxide was reprecipitated in a large excess of methanol several times, filtered, and dried in a vacuum oven at 60 degrees Centigrade for 24 hours. The infrared spectra of the bromomethyl polyphenylene oxide showed the appearance of the absorption peaks at 980 $cm^{-1}$ and 600-700 $cm^{-1}$ ($CH_2Br$) and the disappearance of the 950 $cm^{-1}$ methylbenzene peak as the bromomethyl group content increases. The NMR spectrum exhibited a signal for methyl protons which is shifted to 4.28 ppm ($CH_2Br$), while the

nonbrominated methyl protons on methyl-PPO had signals at 2.07 ppm.

Example 2

A homogeneous polymer alloy blend of aminopolysiloxane-bromomethyl polyphenylene oxide was produced by mixing at ambient conditions, a solution of aminopolydimethylsiloxane (PDMS-$NH_2$) in solvent and a solution of bromomethyl polyphenylene oxide (PPOBr) in solvent. The resulting solution remained clear and homogeneous and was not gelled in seven days, and the polymer alloy was produced by precipitation with methanol. Several reactions were run using the following aminopolydimethylsiloxanes in chloroform solutions;

| Aminopolydimethylsiloxane,(PDMS-$NH_2$) | Amine, Mole % |
|---|---|
| 1 | 2 |
| 2 | 10 |
| 3 | 2 |
| 4 | 2 |

The PDMS-$NH_2$ in chloroform was mixed with a chloroform solution of a bromomethyl polyphenylene oxide which has 60.3 mole percent bromomethyl on the polymer and a number average molecular weight of 55210. The results are shown in Table IX.

Table IX

Gelation Time of Polymer Alloy of Aminopolydimethylsiloxane-Bromomethyl Polyphenylene Oxide from Various Aminopolydimethylsiloxanes (PDMS-$NH_2$) and A Bromomethyl Polyphenylene Oxide (PPOBr) With 60.3 Mole % Bromomethyl And Mn of 55210

| | PPOBr and PDMS-$NH_2$ Concentration in Chloroform (Weight/Volume 0/100) | | |
|---|---|---|---|
| Aminopolysiloxane | 10% | 15% | 20% |
| 3 | 81 minutes | 34 minutes | 15 min. |
| 4 | 88 " | 35 " | 16 " |
| 2 | 12 " | 6 " | 5 " |

These results indicate the reaction rate is accelerated at higher concentrations and is dependent on the degree of functionality on the PDMS-$NH_2$.

Example 3

Solutions of polyphenylene oxide and polyphenylene oxide with various degrees of bromination were prepared in 10 weight percent in chloroform. The polyphenylene oxide and its bromomethylated derivatives used are shown in Table X.

Table X

The $-CH_2Br$ content and Mn of PPO and its bromomethylated derivatives

| PPO or PPOBr | $-CH_2Br$ Mole % | Mn |
|---|---|---|
| PPO | 0 | 23571 |
| PPOBr-1 | 1.3 | 27884 |
| PPOBr-2 | 6.8 | 37656 |
| PPOBr-3 | 14.8 | 47636 |
| PPOBr-4 | 26.9 | 37036 |
| PPOBr-5 | 44.5 | 38685 |
| PPOBr-6 | 60.3 | 55210 |

These solutions were mixed on a one to one weight ratio of PPO or PPOBr to the aminopolydimethylsiloxane ($PDMS-NH_2$), which had 2 mole percent amine functionality on the polysiloxane. The results of mixing the PPOBr and $PDMS-NH_2$ solutions are shown in Table XI.

Table XI

Gelation Time Of $PDMS-NH_2$/PPOBr Polymer Alloy Blends From 10 W/V % Solutions In Chloroform

| PPO or PPOBr | $CH_2Br$ Mole % | Gelation Time (minutes) |
|---|---|---|
| PPO | 0 | incompatible |
| PPOBr-1 | 1.3 | homogeneous, but no gel |
| PPOBr-2 | 6.8 | >270 |
| PPOBr-3 | 14.8 | 225 |
| PPOBr-4 | 26.9 | 131 |
| PPOBr-5 | 44.5 | 100 |
| PPOBr-6 | 60.3 | 69 |

These results indicate the formation of the polymer alloy is accelerated at higher levels of bromomethyl functionality on the PPO. When the PPOBr/PDMS-$NH_2$ mixture was prepared using a PDMS-$NH_2$ obtained from Petrach Systems Inc., Bristol PA. as PS-513, the physical blend instantly phase separated indicating an incompatible blend and insufficient functionality to facilitate the reaction between the PPOBr and the PDMS-$NH_2$. The inventors believe, but do not wish to be held to the theory that, this incompatibility is because the Petrach aminopolysiloxane did not have pendant amino groups along the polysiloxane backbone but was only end-capped with amino groups. Thus, the weight percent of amine functionality was too low to provide sufficient interaction between the components in the blend to achieve compatibility. Neither high temperature treatment at 100°C. for 12 hours nor low temperature treatment at 0°C. for 24 hours induced compatibility of the system when the Petrach PS-513 polysiloxane was utilized. The PPOBr/PDMS-$NH_2$ mixture in which the PPOBr had 1.3 mole percent $-CH_2Br$ and the polysiloxane was a Dow Corning material possessing 2 mole percent pendant and end-capped amino functionality never gelled due to low $-CH_2Br$ functionality. However, the mixture remained homogeneous and transparent in the polymer blend solution.

Example 4

Chloroform solutions of the polymer alloy blends of varying compositions of PPOBr/PDMS-$NH_2$ were prepared by mixing at varying ratios solutions of 10 weight/volume percent PPOBr in chloroform and solutions of 10 weight/volume percent PDMS-$NH_2$ in chloroform. The mixed solutions of the polymer alloy blends were cast onto a glass plate using a casting blade and dried in a vacuum oven at 60°C. for 24 hours. Clear, transparent, homogeneous, polymer alloy

membranes were obtained. The broad range of densities of the polymer alloys produced is shown in Table XII.

Table XII

Density Of PPOBr/PDMS-$NH_2$ Polymer Alloys

| PPOBr/PDMS-$NH_2$ Wt. Ratio | PPOBr, wt. % | Density, $g/cm^3$ |
|---|---|---|
| 1/2 | 33.3 | 1.11 |
| 2/3 | 40.0 | 1.1475 |
| 1/1 | 50.0 | 1.19 |
| 2/1 | 66.7 | 1.2425 |
| 3/1 | 75.0 | 1.3075 |
| - | 100.0 | 1.4325 |

(The PPOBr used in Table XII had 60.3 mole percent bromine as - $CH_2Br$ and the PDMS-$NH_2$ used had 2 mole percent amine functionality.)

Example 5

Methyl phosphonylated phenyl brominated PPO, designated PPBrϕP, prepared as reported by Cabasso, et al., J. Appl. Polym. Sci. 18, 1969-86 (1974) and claimed in U.S. Patent No. 4,073,754 (1978), was dissolved at 10 weight/volume percent in chloroform and the solution mixed at a one to one weight ratio with a 10 weight/volume percent solution of PDMS-$NH_2$ in chloroform in the manner described in Example 2. The mixed solution of the PPBrϕP/PDMS-$NH_2$ polymer alloy blend was cast by the manner described in Example 4 to produce a clear, transparent homogeneous polymer alloy membrane.

Example 6

Using the procedure described in Example 4, polymer blend solutions were prepared in which the weight ratio of PPOBr to PDMS-$NH_2$ was 99/1, 95/5, 90/10, 84/16, 75/25, 67/33, 60/40, 50/50, 40/60, 33/67, 25/75, 16/84, 10/90, 5/95, and 1/99. The polymer blend solutions were clear and

transparent, did not phase separate, and films produced from the casting of these solutions in the manner described in Example 4 were also clear and transparent.

Example 7

Flame retardancy of the polymer alloy films produced by the method described in Example 4 was determined according to ASTM D 635-81 Flame Retardancy Test. Polymer alloy films of the following compositions were prepared and tested according to ASTM D 635-81:

| PPOBrϕBr/PDMS-$NH_2$ (W/W) | Density, $g/cm^3$ |
|---|---|
| 3/4 | - |
| 2/3 | 1.2225 |
| 5/6 | 1.2575 |
| 1/1 | 1.2875 |
| 6/5 | 1.3200 |
| 3/2 | 1.3975 |

where the PPOBrϕBr used had bromine on approximately every other phenyl ring (ϕ) of the PPO polymer and approximately 66 mole percent of the total Br was on the phenyl ring and approximately 33 mole percent of the total Br was on the methyl groups, and the PDMS-$NH_2$ had 2 mole percent amine functionality.

| PPOBrϕBr/PDMS-$NH_2$ | Density, $g/cm^3$ |
|---|---|
| 3/2 | 1.3775 |
| 1/1 | 1.2900 |
| 2/3 | 1.2275 |

here the PPOBrϕBr used had bromine on approximately every fourth phenyl ring (ϕ) and approximately 75 mole percent of the total Br was on the phenyl rings of the PPO polymer and 25 mole percent of the total Br was on the methyl groups, and the PDMS-$NH_2$ had 2 mole percent amine functionality.

| PPOBr/PDMS-$NH_2$ (W/W) | Density, $g/cm^3$ |
|---|---|
| 3/1 | 1.3075 |
| 2/1 | 1.2425 |
| 1/1 | 1.19 |
| 1/2 | 1.11 |

where the PPOBr used had 60.3 mole percent bromine as $-CH_2Br$ and the PDMS-$NH_2$ had 2 weight percent amine functionality.

| PPOBr/PDMS-$NH_2$ (W/W) | Density, $g/cm^3$ |
|---|---|
| 3/1 | 1.3050 |
| 2/1 | 1.2675 |
| 1/1 | 1.2150 |
| 1/2 | 1.1350 |

where the PPOBr used had 60.3 mole percent bromine as $-CH_2Br$ and the PDMS-$NH_2$ had 10 mole percent amine functionality.

All the above polymer alloy films were either non-flammable or self extinguishing within 1 to 2 seconds according to ASTM D 635-81. These results show that the PPOBr/PDMS-$NH_2$ polymer alloys and PPOBrϕBr/PDMS-$NH_2$ polymer alloys of the instant invention are self extinguishing, flame retardant materials.

Example 8

A 10 weight/volume percent solution in chloroform of a one to one by weight mixture of PPOBr (containing 60 mole percent bromine on the methyl groups) and PDMS-$NH_2$ (containing 2 mole percent amine functionality) was prepared which displayed a viscosity in the range of 1000 to 3000 centipoise. The solution was deposited by means of a casting blade (clearance 0.5 millimeters) on the following flat surfaces: glass, cellulose paper, polyethylene coated paper, aluminum, tin, stainless steel, polyvinyl chloride (PVC), and teflon. The chloroform was allowed to evaporate and the coating thus deposited was annealed with an infrared lamp at approximately 50 to 70°C. for a period of 2 minutes. A thin

film formed, coating the substrates. The adherence of this polymer alloy coating to the substrates decreased according to the sequence cellulose paper > polyethylene paper > PVC > glass > tin > stainless steel. The polymer alloy coating's adherence was especially strong to paper and PVC but the coating peeled easily from the teflon surface.

Example 9

A solution prepared in the manner described in Example 8 was diluted to 1 weight percent in chloroform producing a viscosity of 250 - 500 centipoise. The solution was sprayed onto surfaces of paper, PVC, glass, tin, stainless steel, and teflon. The coatings were allowed to air dry and were then annealed as described in Example 8. The coatings peeled only from the teflon surface and none cracked but rather maintained structural dimension in the temperature range of -40°C. to 180°C.

Example 10

A solution of polymer alloy blend as described in Example 8 was prepared with a mixed solvent system consisting of cyclohexane/toluene in a 3 to 2 weight ratio. The viscosity of the solution was <500 centipoise. Polysulfone, polyacrylate, and cellulose acetate hollow fibers of diameter 500 micrometers and wall thickness 70 micrometers were coated by running the fibers into the solution bath and subsequently curing the coated fiber in an oven at 70°C. for 10 minutes. The resulting uniform coating did not crack or peel off the fibers.

Example 11

A polymer alloy blend solution, prepared by the method described in Example 8, was pumped into the bore of hollow, porous polysulfone fibers followed by a stream of hot air (70°C.) for 5 minutes. A PPOBr/PDMS-$NH_2$ polymer alloy film of approximately 1 micrometer thickness was formed on

the inner walls of the hollow fibers. The coated hollow fiber exhibited an oxygen to nitrogen separation factor of 3.

Example 12

PPOBr/PDMS-$NH_2$ polymer alloy blend solutions of 5 to 10 weight/volume percent in chloroform were prepared and cast onto a glass plate by means of a casting blade. The solvent was evaporated at ambient conditions and the resulting film was dried in a vacuum oven at 60°C. for 24 hours. Polymer alloy films of 1 to 2 mil (25 to 50 micrometers) thickness were obtained and used as membranes to measure permeability of oxygen, nitrogen, and air. The separation factors (SF) of the polymer alloy membranes of the instant invention decrease when the polydimethylsiloxane fraction of the polymer alloy composition is increased. However, the observed SF is less than that of the theoretical or ideal separation factor, SF*, as shown in Table XIII.

Table XIII

Equilibrium Separation Factor vs. Polymer Alloy Composition (2 mole % amine functionality)

| PDMS-$NH_2$, wt. % | SF | SF* |
|---|---|---|
| 0 | 3.8 | 4.8 |
| 50 | 1.95 | 2.1 |
| 60 | 1.925 | 2.05 |
| 100 | 1.9 | 2.0 |

(SF = separation factor, observed; SF* = separation factor, ideal. The PDMS-$NH_2$ used had 2 mole percent amine functionality and the PPOBr used had 60 mole percent bromine as $-CH_2Br$.)

Example 13

Using the procedure described in Example 12, SF values were obtained on polymer alloy membranes composed of varying amounts of PDMS-$NH_2$ which contained 10 mole percent amine functionality. Table XIV shows that the observed SF

values decline in an almost linear manner as the weight percent of PDMS- $NH_2$ in the polymer alloy composition is increased.

Table XIV

Equilibrium Separation Factor vs. Polymer Alloy Membrane Composition (10 wt. % amine functionality)

| PDMS-$NH_2$, wt. % | SF | SF* |
|---|---|---|
| 0 | 3.8 | 4.8 |
| 25.0 | 2.85 | 2.95 |
| 33.3 | 2.725 | 3.05 |
| 50.0 | 2.2 | 2.5 |
| 66.7 | 1.775 | 1.8 |
| 100.0 | 1.9 | 2.0 |

(SF =separation factor, observed; SF* = separation factor, ideal. The PDMS-$NH_2$ used had 10 mole percent amine functionality and the PPOBr used had 60 mole percent bromine as $-CH_2Br$.)

Claims:

1. Transparent, homogeneous aminopolysiloxane-bromoalkyl polyphenylene oxide polymer alloy comprising (A) at least one aminopolysiloxane unit represented by the formula

$$R1-[(\underset{CH_3}{\overset{CH_3}{Si}}-O)_x-(\underset{R2}{\overset{CH_3}{Si}}-O)_y-(\underset{CH_3}{\overset{CH_3}{Si}}-O)_z]-R1$$

wherein R1 is a trimethylsiloxy group or aminoalkyl group wherein the aminoalkyl group has one to three carbons and has at least one primary, secondary, or tertiary monoamine, diamine, or polyamine alkyl group wherein the polyamino alkyl group has 3 or more amine groups and the ratio of (x+z)/y is no greater than 47 to 1; R2 is selected from a group consisting of $CH_2CH_2CH_2NH_2$, $CH_2CH_2NH_2$, $CH_2NH_2$, $CH_2NHCH_2CH_2NH_2$, $CH_2CH_2CH_2NHCH_2CH_2NH_2$, $CH_2CH(CH_3)CH_2NHCH_2CH_2NH_2$, and $CH_3$, wherein when R2 is methyl at least one of the R1 groups is aminoalkyl and when R2 is methyl the molecular weight of the aminopolysiloxane is less than or equal to approximately 20,000, and (B) a polymer, containing at least one bromoalkyl substituted polyphenylene oxide unit, represented by the general formula

$$H-[\underset{R4}{\overset{R3}{Ar}}-O]_m-[\underset{R6}{\overset{R5}{Ar}}-O]_n-H$$

wherein R3, R4, R5 and R6 are each independently hydrogen, bromine, alkyl groups consisting of one to six carbon atoms,

phosphoryl ester groups, phosphonylated alkyl groups or bromoalkyl groups consisting of one to six carbon atoms wherein at least two of R3, R4, R5, or R6 are bromoalkyl groups; m and n are positive integers such that $10 < (m+n) < 1000$ and $n/(m+n) > 0.01$; wherein the weight ratio of (A) to (B) is 1:99 to 99:1.

2. A method for making a gas permeable polymer alloy membrane suitable for increasing the oxygen gas content of an oxygen-nitrogen gas mixture comprising (I) applying to a solid substrate a solvent solution of a composition of claim 1, in a thickness sufficient to provide a gas permeable membrane; (II) allowing the cast composition to cure, (III) drying at ambient conditions or in a vacuum oven the cured polymer formed from the composition, and (IV) removing the gas permeable membrane from the solid substrate.

3. A transparent,homogeneous membrane obtained by the method of claim 2.

4. A method of separating gases which comprises (I) passing a mixture of gases through a permeable membrane as claimed in claim 3; (II) allowing the gases to separate.

5. A method of preparing a transparent, homogeneous aminopolysiloxane-bromoalkyl polyphenylene oxide polymer alloy comprising at least one aminopolysiloxane unit represented by the formula

$$R1 \!-\!\!\left[ \left(\begin{matrix} CH_3 \\ | \\ Si\!-\!O \\ | \\ CH_3 \end{matrix}\right)_x \!-\! \left(\begin{matrix} CH_3 \\ | \\ Si\!-\!O \\ | \\ R2 \end{matrix}\right)_y \!-\! \left(\begin{matrix} CH_3 \\ | \\ Si\!-\!O \\ | \\ CH_3 \end{matrix}\right)_z \right]\!\!-\!R1$$

wherein R1 is a trimethylsiloxy group or aminoalkyl group wherein the aminoalkyl group has one to three carbons and has at least one primary, secondary, or tertiary monoamine, diamine, or polyamine alkyl group wherein the polyamino alkyl group has 3 or more amine groups and the ratio of $(x+z)/y$ is no greater than 47 to 1; R2 is selected from a group consisting of $CH_2CH_2CH_2NH_2$, $CH_2CH_2NH_2$, $CH_2NH_2$, $CH_2NHCH_2CH_2NH_2$, $CH_2CH_2CH_2NHCH_2CH_2NH_2$, $CH_2CH(CH_3)CH_2NHCH_2CH_2NH_2$, and $CH_3$, wherein when R2 is methyl at least one of the R1 groups is aminoalkyl and when R2 is methyl the molecular weight of the aminopolysiloxane is less than or equal to approximately 20,000, and (B), a polymer containing at least one bromoalkyl substituted polyphenylene oxide unit, represented by the general formula

$$H\!-\!\left[\begin{matrix} R3 \\ | \\ Ar\!-\!O \\ | \\ R4 \end{matrix}\right]_m \!\!-\!\!-\!\!-\! \left[\begin{matrix} R5 \\ | \\ Ar\!-\!O \\ | \\ R6 \end{matrix}\right]_n \!-\!H$$

wherein R3, R4, R5 and R6 are each independently hydrogen, bromine, alkyl groups consisting of one to six carbon atoms, phosphoryl ester groups or bromoalkyl groups consisting of one to six carbon atoms wherein at least one of R3, R4, R5, or R6 is a bromoalkyl group; m and n are positive integers such that $10 < (m+n) < 1000$ and $n/(m+n) > 0.01$; wherein the weight ratio of (A) to (B) is 1:99 to 99:1, by combining the aminopolysiloxane with the bromoalkyl polyphenylene oxide by means of (I) dissolving the aminopolysiloxane in solvent, (II) dissolving the bromoalkyl polyphenylene oxide in solvent, (III) mixing at ambient conditions the solvent

solutions of the aminopolysiloxane and bromoalkyl polyphenylene oxide, and (IV) collecting the resulting aminopolysiloxane-bromoalkyl polyphenylene oxide polymer alloy.

6. A method of preparing a coated substrate which comprises applying to a substrate a solvent solution of an aminopolysiloxane-bromoalkylpolyphenylene oxide polymer alloy, obtained by the method of claim 5, and curing the resultant coating.

7. A method of preparing a coated article which comprises applying to an article a solvent solution of an aminopolysiloxane-bromoalkylpolyphenylene oxide polymer alloy, obtained by the method of claim 5, and curing the resultant coating.

8. A coated substrate obtained by the method of claim 6.

9. A coated article obtained by the method of claim 7.

10. A method of preparing hollow, porous, fibers which have been coated on the inner walls with a bromoalkyl polyphenylene oxide-aminopolysiloxane polymer alloy which comprises pumping the polymer alloy of claim 1, into the bore of hollow, porous fibers and curing the polymer coating by subsequently passing into the coated bore of the fiber a stream of air sufficiently hot to effectuate the cure of the polymer alloy coating.

11. A coated, hollow, porous fiber obtained by the method of claim 10.

12. A transparent, homogeneous aminopolysiloxane-methyl phosphonylated phenyl brominated polyphenylene oxide polymer alloy comprising (A) at least one aminopolysiloxane unit represented by the formula

$$R1 - \left[ (\overset{CH_3}{\underset{CH_3}{Si}}-O)_x - (\overset{CH_3}{\underset{R2}{Si}}-O)_y - (\overset{CH_3}{\underset{CH_3}{Si}}-O)_z \right] - R1$$

wherein R1 is a trimethylsiloxy group or aminoalkyl group wherein the aminoalkyl group has one to three carbons and has at least one primary, secondary, or tertiary monoamine, diamine, or polyamine alkyl group wherein the polyamino alkyl group has 3 or more amine groups and the ratio of (x+z)/y is no greater than 47 to 1; R2 is selected from a group consisting of $CH_2CH_2CH_2NH_2$, $CH_2CH_2NH_2$, $CH_2NH_2$, $CH_2NHCH_2CH_2NH_2$, $CH_2CH_2CH_2NHCH_2CH_2NH_2$, $CH_2CH(CH_3)CH_2NHCH_2CH_2NH_2$, and $CH_3$, wherein when R2 is methyl at least one of the R1 groups is aminoalkyl and when R2 is methyl the molecular weight of the aminopolysiloxane is less than or equal to approximately 20,000, and (B) a polymer, containing at least one phenyl

brominated methyl phosphonylated polyphenylene oxide unit, represented by the general formula

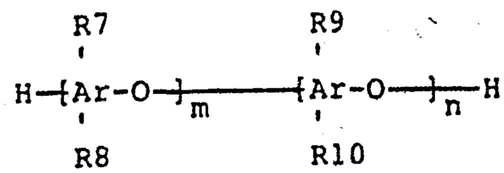

wherein R7, R8, R9 and R10 are each independently hydrogen, bromine, alkyl groups consisting of one to six carbon atoms, phosphonate groups, phosphonylated alkyl groups or bromoalkyl groups consisting of one to six carbon atoms wherein at least two of R7, R8, R9, or R10 are bromoalkyl groups; wherein one or more of the methyl groups on the phenyl brominated polyphenylene oxide have been phosphonylated; m and n are positive integers such that $10 < (m+n) < 1000$ and $n/(m+n) > 0.01$; wherein the weight ratio of (A) to (B) is 1:99 to 99:1.

13. A method of preparing the polymer alloy of claim 12 by combining the aminopolysiloxane with the methyl phosphonylated phenyl brominated polyphenylene oxide by means of (I) dissolving the aminopolysiloxane in solvent, (II) dissolving the methylphosphonylated phenyl brominated polyphenylene oxide in solvent, (III) mixing at ambient conditions the solvent solutions of the aminopolysiloxane and methylphosphonylated phenyl brominated polyphenylene oxide, and (IV) collecting the resulting aminopolysiloxane-methylphosphonylated phenyl brominated polyphenylene oxide polymer alloy.

14. A method for making a gas permeable polymer alloy membrane suitable for increasing the oxygen gas content of an oxygen-nitrogen gas mixture comprising (I) applying to a solid substrate a solvent solution of a composition of claim 13, in a thickness sufficient to provide a gas permeable membrane; (II) allowing the cast composition to cure, (III) drying at ambient conditions or in a vacuum oven the cured polymer formed from the composition ,and (IV) removing the gas permeable membrane from the solid substrate.

15. A transparent,homogeneous membrane obtained by the method of claim 14.

16. A method of separating gases which comprises (I) passing a mixture of gases through a permeable membrane as claimed in claim 14; (II) allowing the gases to separate.

17. A method of preparing a coated substrate which comprises applying to a substrate a solvent solution of an aminopolysiloxane-methylphosphonylated phenyl brominated polyphenylene oxide polymer alloy, obtained by the method of claim 13, and curing the resultant coating.

18. A method of preparing a coated article which comprises applying to an article a solvent solution of an aminopolysiloxane-methylphosphonylated phenyl brominated polyphenylene oxide polymer alloy, obtained by the method of claim 13, and curing the resultant coating.

19. A coated substrate obtained by the method of claim 17.

20. A coated article obtained by the method of claim 18.